# EUROPEAN PATENT SPECIFICATION

(11) **EP 4 046 771 B1**
(45) Date of publication and mention of the grant of the patent: **12.06.2024**
(21) Application number: 22153167.6
(22) Date of filing: 25.01.2022
(51) Int. Cl.: B29C 45/06, B29C 45/80

(54) **INJECTION MOLDING MACHINE**
SPRITZGIESSMASCHINE
MACHINE DE MOULAGE À INJECTION

(30) Priority: 28.01.2021 JP 2021012269
(43) Date of publication of application: 24.08.2022
(73) Proprietor: SUMITOMO HEAVY INDUSTRIES, LTD., Tokyo 141-6025 (JP)
(72) Inventor: ONUKI, Masaya, Chiba, 263-0001 (JP); SAWAYA, Atsushi, Chiba, 263-0001 (JP); ISHII, Yoshihisa, Chiba, 263-0001 (JP)
(74) Representative: Louis Pöhlau Lohrentz

(56) References cited:
- JP-A- H 058 246
- JP-A- 2002 001 757
- JP-A- 2003 117 936
- JP-A- 2007 283 701
- JP-A- 2012 206 398
- JP-A- 2017 071 104
- US-B1- 6 402 504

## Description

### BACKGROUND OF THE INVENTION

### Field of the Invention

The present invention relates to an injection molding machine.

### Description of Related Art

An injection molding machine disclosed in Japanese Unexamined Patent Publication JP 2002 001757 A includes a table disposed to be rotatable in a frame, a plurality of lower dies attached to the table, driving means for rotating the table to place each of the lower dies at a mold clamping position and a manipulation position, a positioning member ejected downward from a lower surface of the table, and first and second stoppers on which the positioning member abuts. JP H05 8246 A and JP 2003 117936 A also relate to injection molding machines with rotary tables and stopper mechanisms. US 6 402 504 B1 discloses a rotatable platen assembly comprising an adjustable rotating stop which is formed as a block and provided in the rotary table. A pair of shock absorbers include a respective elongated rod and the rotating stop contacts the rod end of the shock absorber, which slows the rotating plate and its mold to avoid a high impact stop.

When the driving means rotates the table in a positive direction and the positioning member abuts on the second stopper, one lower die is placed at the mold clamping position, and the other lower die is placed at the manipulation position. On the other hand, when the driving means rotates the table in a direction opposite thereto and the positioning member abuts the first stopper, one lower die is placed at the manipulation position, and the other lower die is placed at the mold clamping position.

In addition, the injection molding machine disclosed in Japanese Unexamined Patent Publication JP 2002 001757 A includes a guide that guides the first stopper, and a cylinder serving as an actuator for advancing and retreating the first stopper. The control device operates the cylinder so that the first stopper is placed at an abutment position where the positioning member abuts on the first stopper and a retreated position where the positioning member does not abut on the first stopper.

### SUMMARY OF THE INVENTION

In Japanese Unexamined Patent Publication No. JP 2002 001757 A, the first stopper is guided by a pair of guides. The first stopper includes an ejecting portion ejected from the pair of guides in a state of being placed at the abutment position. The positioning member abuts on the ejecting portion. The pair of guides are provided in only one side of a movement locus of the positioning member. Therefore, when the positioning member is pressed against the first stopper, a rotational moment is generated in the first stopper. Therefore, the first stopper cannot be stably pressed.

A first aspect of the present invention is to provide a technique for stably pressing a stopper that stops rotation of a rotary table.

In Japanese Unexamined Patent Publication No. JP 2002 001757 A one positioning member is pressed against both the first stopper and the second stopper. In contrast, it is conceivable to use a different combination of the positioning member and the stopper depending on a rotation direction of the table. However, while the table is rotated, there is a possibility that an unintended combination of the positioning member and the stopper may interfere with each other, and the rotation of the table may be intermediately hindered.

A second aspect which is not part of the present invention is to provide a technique for preventing interference in the unintended combination of the positioning member and the stopper when the different combination of the positioning member and stopper is used depending on the rotation direction of the rotary table.

According to a first aspect of the present invention, there is provided an injection molding machine according to claim 1.

According to the first aspect of the present invention, the stopper is pressed on both sides of the rotary table in the radial direction across the movement locus of the block. In this manner, a rotational moment can be prevented from being generated in the stopper, and the stopper can be stably pressed.

### BRIEF DESCRIPTION OF THE DRAWINGS

FIG. 1 is a perspective view illustrating a state when platen opening is completed in an injection molding machine according to an embodiment.
FIG. 2 is a sectional view illustrating a state when platen opening is completed in an injection molding machine according to the embodiment.
FIG. 3 is a sectional view illustrating a state when mold clamping is performed in the injection molding machine according to the embodiment.
FIG. 4 is a sectional view illustrating an ejector unit of the injection molding machine according to the embodiment.
FIG. 5A is a sectional view illustrating an example of the ejector unit after mold opening starts and before an ejection operation starts. FIG. 5B is a sectional view illustrating an example of the ejector unit when the ejection operation starts. FIG. 5C is a sectional view illustrating an example of the ejector unit when the mold opening is completed and the ejection operation is completed.
FIG. 6 is a plan view illustrating a positioning mechanism of a rotary table according to the embodiment.
FIG. 7 is an enlarged plan view illustrating a portion in FIG. 6, and is a plan view illustrating a state where a block is pressed against a stopper.
FIG. 8 is a perspective view when the block and stopper in FIG. 7 are viewed from diagonally above.
FIG. 9 is a plan view corresponding to FIG. 7, and is a plan view illustrating a state where the block laterally passes through the stopper.
FIG. 10 is a plan view illustrating a state where a rotary table is positioned at a rotation angle of 0° by a positioning mechanism according to a modification example not being part of the invention. a
FIG. 11 is a plan view illustrating a state where the rotary table is positioned at a rotation angle of 120° by the positioning mechanism according to the modification example not being part of the invention.
FIG. 12 is a plan view illustrating a state where the rotary table is positioned at a rotation angle of 240° by the positioning mechanism according to the modification example not being part of the invention.
FIG. 13 is a side view illustrating a state where a second block according to the modification example not being part of the invention is pressed against a second stopper.
FIG. 14 is a side view illustrating a state where a first block according to the modification example not being part of the invention passes above the second stopper.

### DETAILED DESCRIPTION OF THE INVENTION

Hereinafter, embodiments of the present invention will be described with reference to the drawings. In each drawing, the same reference numerals will be assigned to the same or corresponding configurations, and description thereof may be omitted.

### Injection Molding Machine

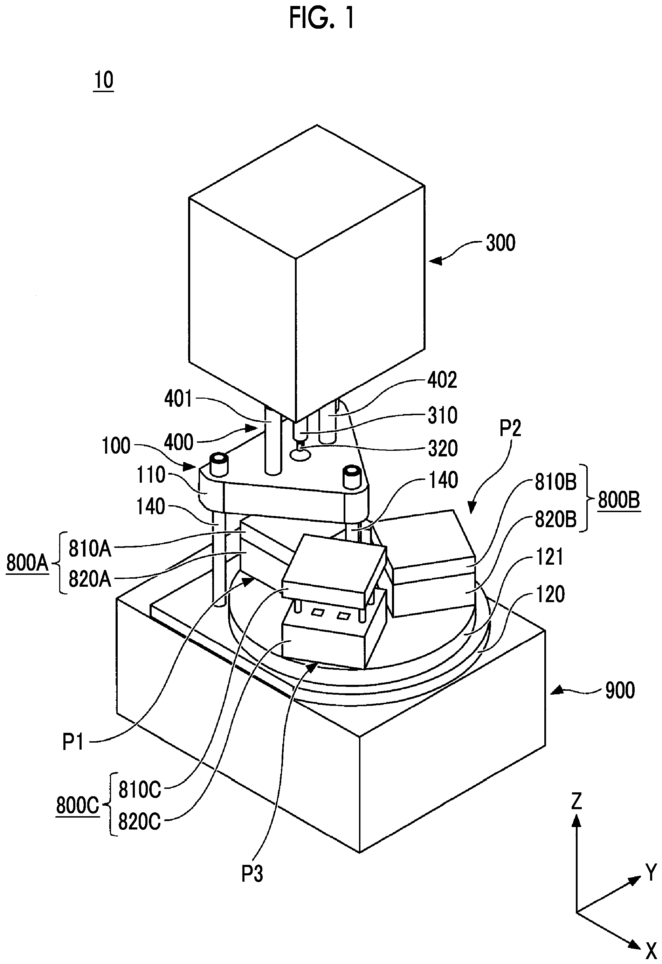

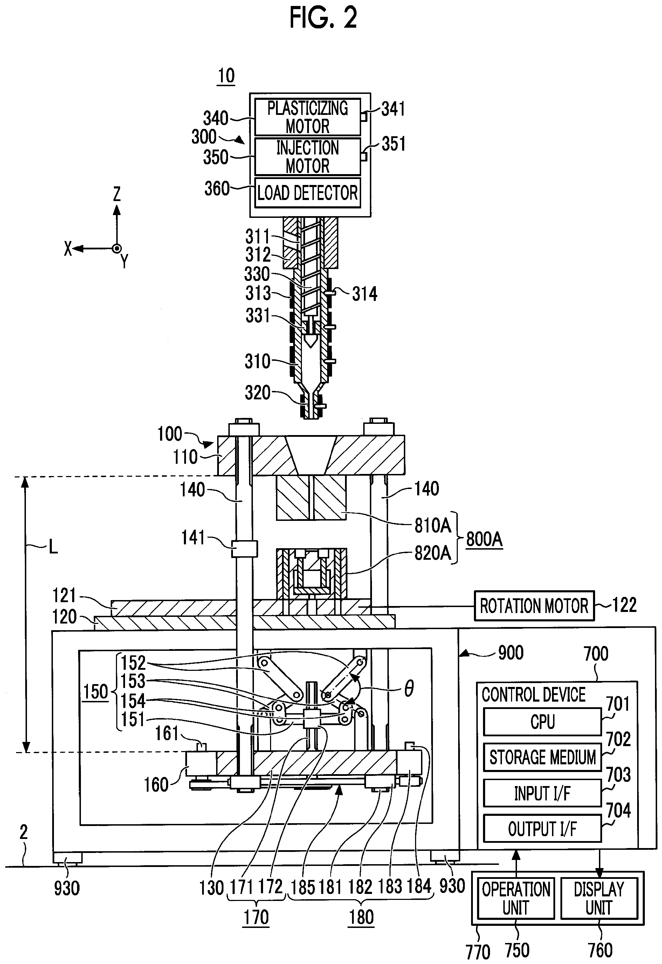

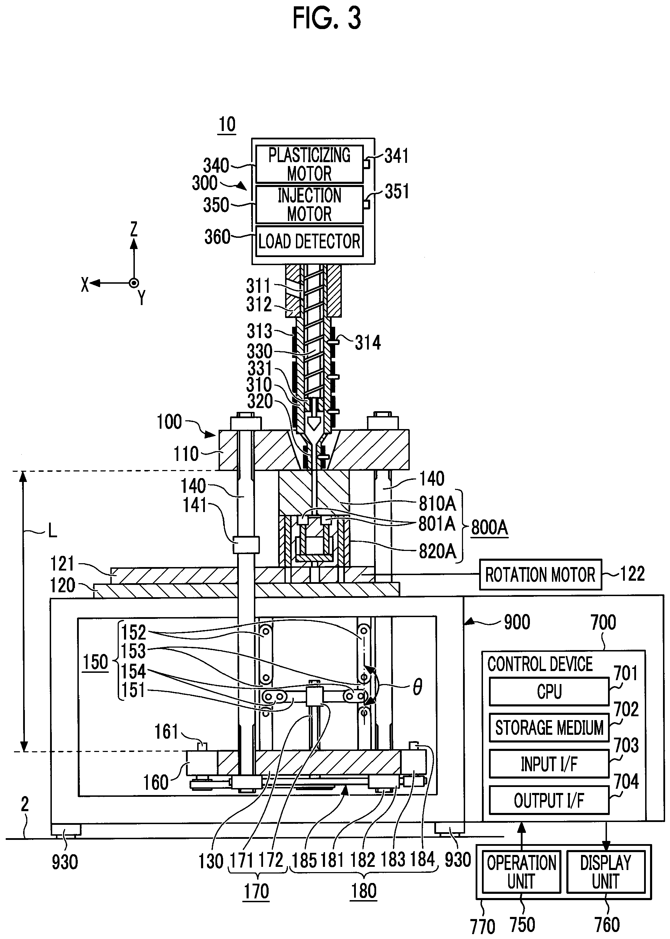

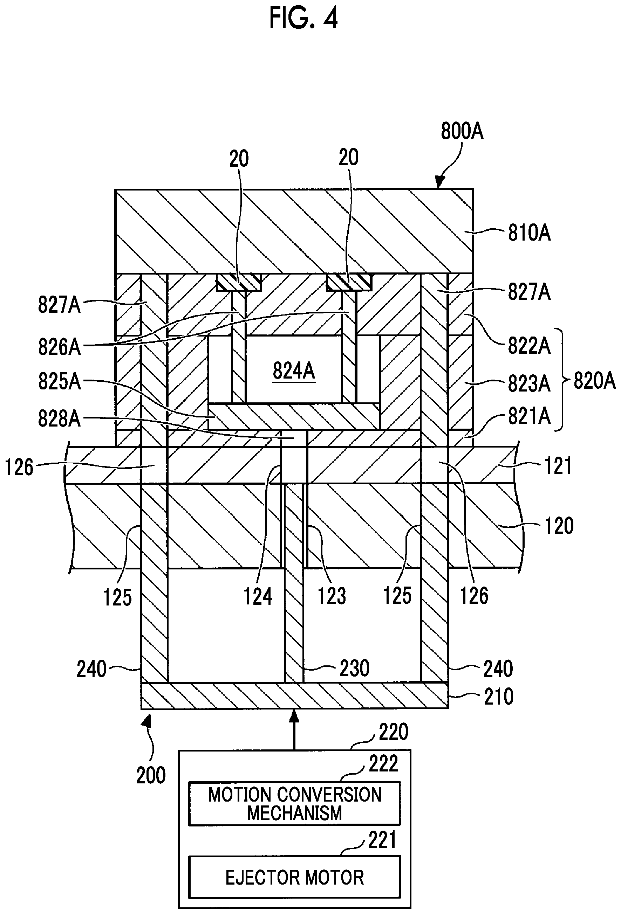

FIG. 1 is a perspective view illustrating a state when platen opening is completed in an injection molding machine according to the embodiment. FIG. 2 is a sectional view illustrating a state when the platen opening is completed in the injection molding machine according to the embodiment. FIG. 3 is a sectional view illustrating a state when mold clamping is performed in the injection molding machine according to the embodiment. FIG. 4 is a sectional view illustrating an ejector unit of the injection molding machine according to the embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a vertical type, the Z-axial direction is a mold clamping direction.

As illustrated in FIGS. 1 to 4, an injection molding machine 10 includes the mold clamping unit 100 that performs mold clamping of mold units 800A, 800B, and 800C, an ejector unit 200 that ejects a molding product 20 molded by the mold units 800A, 800B, and 800C, an injection unit 300 that injects a molding material into the mold units 800A, 800B, and 800C, a moving unit 400 that raises and lowers the injection unit 300 with respect to the mold units 800A, 800B, and 800C, a control device 700 that controls each component of the injection molding machine 10, and a frame 900 that supports each component of the injection molding machine 10. The frame 900 is installed on a floor surface 2 via a leveling adjuster 930. Hereinafter, each component of the injection molding machine 10 will be described.

### Mold Clamping Unit

As illustrated in FIG. 1, the mold clamping unit 100 sequentially performs mold clamping of a plurality of the mold units 800A, 800B, and 800C. The mold unit 800A includes an upper die 810A and a lower die 820A, the mold unit 800B includes an upper die 810B and a lower die 820B, and the mold unit 800C includes an upper die 810C and a lower die 820C. The mold units 800A, 800B, and 800C have the same configuration.

For example, the mold clamping unit 100 is a vertical type, and the mold clamping direction is a vertical direction. The mold clamping unit 100 includes an upper platen 110 that sequentially presses a plurality of the upper dies 810A, 810B, and 810C from above, a rotary table 121 to which the lower dies 820A, 820B, and 820C are attached, a rotation motor 122 that rotates the rotary table 121, and a lower platen 120 that supports the rotary table 121 from below.

The upper platen 110 is disposed above the lower platen 120, and is freely raised and lowered with respect to the frame 900. A lower surface of the upper platen 110 sequentially presses the plurality of upper dies 810A, 810B, and 810C from above.

On the other hand, the lower platen 120 is fixed to the frame 900. The rotary table 121 is placed to be rotatable on a surface (upper surface) facing the upper platen 110 in the lower platen 120. The plurality of lower dies 820A, 820B, and 820C are attached to an upper surface of the rotary table 121.

The rotation motor 122 rotates the rotary table 121 so that the plurality of mold units 800A, 800B, and 800C are respectively and sequentially disposed at a first position P1, a second position P2, and a third position P3. In FIG. 1, the mold unit 800A is disposed at the first position P1, the mold unit 800B is disposed at the second position P2, and the mold unit 800C is disposed at the third position P3.

For example, the first position P1 is a molding position where mold clamping and injection are performed. The second position P2 is a cooling position where the molding product 20 is cooled. The third position P3 is, for example, an ejector position where the molding product 20 is ejected. The third position P3 may also serve as mold open and close positions where mold opening and closing are performed. In addition, the third position P3 may also serve as an insert position where an insert material is set in the lower dies 820A, 820B, and 820C.

Processes performed at stop positions (including the first position P1, the second position P2, and the third position P3) of the mold unit are not limited to the above-described combination. In addition, the number of stop positions of the mold unit may be the same as the number of the mold units . Without being limited to three, the number may be two, or may be four or more. For example, an ejector position and an insert position may be individually set.

In addition, in the above-described embodiment, the number of the upper dies and the number of the lower dies are the same as each other. However, the number of the upper dies may be one, or the number of the lower dies may be two or more. In the latter case, the upper die is attached to the upper platen 110, and is raised and lowered together with the upper platen 110. In this case, the mold opening and closing are performed by raising and lowering the upper platen 110, and the mold opening and closing are performed at the molding position.

As illustrated in FIGS. 2 and 3, the mold clamping unit 100 includes a toggle support 130 disposed below the lower platen 120, a tie bar 140 that connects the upper platen 110 and the toggle support 130 to each other, a toggle mechanism 150 disposed between the lower platen 120 and the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval L between the upper platen 110 and the toggle support 130.

The toggle support 130 can be raised and lowered with respect to the frame 900 below the lower platen 120. The toggle support 130 is connected to the upper platen 110 by the tie bar 140. The upper platen 110 is raised and lowered by raising and lowering the toggle support 130.

The tie bar 140 connects the upper platen 110 and the toggle support 130 to each other at the interval L in the mold clamping direction. A plurality of (for example, three) the tie bars 140 may be used. The plurality of tie bars 140 are disposed parallel to each other in the mold clamping direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the lower platen 120 and the toggle support 130, and raises and lowers the toggle support 130 with respect to the lower platen 120. The toggle mechanism 150 includes a crosshead 151 that moves in the mold clamping direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the lower platen 120 by a pin. The second link 153 is oscillatingly attached to the toggle support 130 by a pin. The second link 153 is attached to the crosshead 151 via a third link 154. When the crosshead 151 is relatively raised and lowered with respect to the toggle support 130, the first link 152 and the second link 153 are bent and stretched, and the toggle support 130 is raised and lowered with respect to the lower platen 120.

A configuration of the toggle mechanism 150 is not limited to configurations illustrated in FIGS. 2 and 3. For example, in FIGS. 2 and 3, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 relatively raises and lowers the crosshead 151 with respect to the toggle support 130. In this manner, the first link 152 and second link 153 are bent and stretched to raise and lower the upper platen 110. The mold clamping motor 160 is connected to the motion conversion mechanism 170 via a belt or a pulley, but may be directly connected to the motion conversion mechanism 170.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut. The screw shaft is supported to be rotatable by the toggle support 130, and the screw nut is fixed to the crosshead 151. When the mold clamping motor 160 is driven to rotate the screw shaft, the screw nut and the crosshead 151 are relatively raised and lowered with respect to the toggle support 130. In this manner, the first link 152 and the second link 153 are bent and stretched, and the toggle support 130 is raised and lowered.

The mold clamping motor 160 of the present embodiment is attached to the toggle support 130, but may be attached to the frame 900. In this case, an upper end portion of the screw shaft may be supported to be rotatable by the crosshead 151, a lower end portion of the screw shaft may be spline-coupled to a rotating member held to be rotatable by the frame 900, and the screw nut may be fixed to the toggle support 130. When the mold clamping motor 160 is driven to rotate the rotating member, the screw shaft is raised and lowered while rotating, and the crosshead 151 is relatively raised and lowered with respect to the toggle support 130. In this manner, the first link 152 and the second link 153 are bent and stretched, and the toggle support 130 is raised and lowered.

The mold clamping unit 100 performs a platen closing process, a pressurizing process, a mold clamping process, a depressurizing process, a platen opening process, and a table rotating process under the control of the control device 700. The platen closing process is a process of lowering the upper platen 110 and causing the upper platen 110 to touch the upper surface of the upper dies 810A, 810B, and 810C. The pressurizing process is a process of further lowering the upper platen 110 to generate a mold clamping force. The mold clamping process is a process of stopping the upper platen 110 to maintain the mold clamping force generated in the pressurizing process. The depressurizing process is a process of raising the upper platen 110 to reduce the mold clamping force generated in the pressurizing process. The platen opening process is a process of further raising the upper platen 110 to separate the upper platen 110 from the upper dies 810A, 810B, and 810C. The table rotating process is a process of rotating the rotary table 121. For example, the table rotating process is performed after the platen opening process is completed and before the subsequent platen closing process starts.

In the platen closing process, the mold clamping motor 160 is driven to relatively raise the crosshead 151 with respect to the toggle support 130 to a platen closing completion position at a set movement speed. In this manner, the upper platen 110 is lowered to cause the upper platen 110 to touch the upper surface of the upper dies 810A, 810B, and 810C. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed detector for measuring a movement speed of the crosshead 151 are not limited to the mold clamping motor encoder 161, and a general detector can be used. In addition, an upper platen position detector for detecting a position of the upper platen 110 and an upper platen movement speed detector for measuring a movement speed of the upper platen 110 are not limited to the mold clamping motor encoder 161, and a general detector can be used.

In the pressurizing process, the mold clamping motor 160 is further driven to relatively raise the crosshead 151 with respect to the toggle support 130 from the platen closing completion position to a mold clamping position. In this manner, the upper platen 110 is lowered to generate the mold clamping force.

In the mold clamping process, the mold clamping motor 160 is driven to maintain a position of the crosshead 151 at the mold clamping position. In the mold clamping process, the mold clamping force generated in the pressurizing process is maintained. In the mold clamping process, a cavity space is formed between the upper dies 810A, 810B, and 810C and the lower dies 820A, 820B, and 820C. For example, as illustrated in FIG. 3, in the mold clamping process, a cavity space 801A is formed between the upper die 810A and the lower die 820A. The injection unit 300 fills the cavity space with a liquid molding material. The molding product 20 (refer to FIG. 4) is obtained by solidifying the molding material filling the cavity space.

For example, the number of the cavity spaces 801A is two or more, and a plurality of the molding products 20 can be obtained at the same time. The number of the cavity spaces 801A may be one. In addition, an insert material may be disposed in a portion of the cavity space 801A, and the other portion of the cavity space 801A may be filled with the molding material. In this case, the molding product 20 in which the insert material and the molding material are integrated with each other can be obtained.

In the depressurizing process, the mold clamping motor 160 is driven to relatively lower the crosshead 151 with respect to the toggle support 130 from the mold clamping position to a platen opening start position. In this manner, the upper platen 110 is raised to reduce the mold clamping force. The platen opening start position and the platen closing completion position may be the same position.

In the platen opening process, the mold clamping motor 160 is driven to further relatively lower the crosshead 151 from the platen opening start position to the platen opening completion position at a set movement speed. In this manner, the upper platen 110 is raised to separate the upper platen 110 from the upper dies 810A, 810B, and 810C.

After the platen opening process is completed and before the subsequent platen closing process starts, the table rotating process is performed. In the table rotating process, the rotary table 121 is rotated to rotate the mold units 800A, 800B, and 800C. The plurality of mold units 800A, 800B, and 800C are respectively and sequentially disposed at the first position P1, the second position P2, and the third position P3. A rotation direction of the rotary table 121 may be switched between a first direction and a second direction opposite to the first direction. The rotation directions are switched so that a disposition of a wiring or a pipe fixed to the rotary table 121 is restored. Therefore, the wiring or the piping can be easily handled. However, the rotation direction of the rotary table 121 may be fixed in only one of the first direction and the second direction.

Setting conditions in the platen closing process and the pressurizing process are collectively set as a series of setting conditions. For example, the movement speed or positions of the crosshead 151 (including the platen closing start position, the movement speed switching position, the platen closing completion position, and the mold clamping position) and the mold clamping force in the platen closing process and the pressurizing process are collectively set as a series of setting conditions. The platen closing start position, the movement speed switching position, the platen closing completion position, and the mold clamping position are aligned in this order from a lower side toward an upper side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the platen opening process are set in the same manner. For example, the movement speed or positions (the platen opening start position, the movement speed switching position, and the platen opening completion position) of the crosshead 151 in the depressurizing process and the platen opening process are collectively set as a series of setting conditions. The platen opening start position, the movement speed switching position, and the platen opening completion position are aligned in this order from the upper side toward the lower side, and represent the start point and the end point of the section in which the movement speed is set. The movement speed is set for each section. The number of the movement speed switching positions may be one or more. The movement speed switching position may not be set. The platen opening start position and the platen closing completion position may be the same position. In addition, the platen opening completion position and the platen closing start position may be the same position.

Instead of the movement speed or the position of the crosshead 151, the movement speed or the positions of the upper platen 110 may be set. In addition, instead of the position (for example, the mold clamping position) of the crosshead 151 or the position of the upper platen 110, the mold clamping force may be set.

Incidentally, the toggle mechanism 150 amplifies a driving force of the mold clamping motor 160, and transmits the driving force to the upper platen 110. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold units 800A, 800B, and 800C is changed due to replacement of the mold units 800A, 800B, and 800C or a temperature change in the mold units 800A, 800B, and 800C, mold space adjustment is performed so that a predetermined mold clamping force is obtained during the mold clamping. For example, in the mold space adjustment, the interval L between the upper platen 110 and the toggle support 130 is adjusted so that a link angle θ of the toggle mechanism 150 becomes a predetermined angle when the upper platen 110 touches the upper dies 810A, 810B, and 810C.

The mold clamping unit 100 has the mold space adjustment mechanism 180. The mold space adjustment mechanism 180 performs the mold space adjustment by adjusting the interval L between the upper platen 110 and the toggle support 130. For example, a timing for the mold space adjustment is after the platen opening process is completed and before the subsequent platen closing process starts. For example, the mold space adjustment mechanism 180, includes a screw shaft 181 formed in a lower end portion of the tie bar 140, a screw nut 182 held by the toggle support 130 to be rotatable and not to be raised and lowered, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, the position of the toggle support 130 with respect to the tie bar 140 is adjusted, and the interval L between the upper platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may have a mold temperature controller that adjusts the temperature of the mold units 800A, 800B, and 800C. The mold units 800A, 800B, and 800C have a flow path of the temperature control medium inside thereof. The mold temperature controller adjusts the temperature of the mold units 800A, 800B, and 800C by adjusting the temperature of a temperature control medium supplied to a flow path of the mold units 800A, 800B, and 800C.

The mold clamping unit 100 of the present embodiment is the vertical type in which the mold clamping direction is a vertical direction, but may be a horizontal type in which the mold clamping direction is a horizontal direction.

The mold clamping unit 100 of the present embodiment includes the mold clamping motor 160 as a drive source . However, a hydraulic cylinder may be provided instead of the mold clamping motor 160.

### Ejector Unit

The ejector unit 200 ejects the molding product 20 from the mold units 800A, 800B, and 800C. Since the mold units 800A, 800B, and 800C have the same configuration, an operation for ejecting the molding product 20 from the mold unit 800A will be typically described.

First, a structure of the mold unit 800A will be described with reference to FIG. 4. The mold unit 800A includes an upper die 810A and a lower die 820A. The lower die 820A includes an attachment plate 821A to be attached the rotary table 121, a die plate 822A forming a cavity space 801A, and an intermediate plate 823A forming a space 824A between the attachment plate 821A and the die plate 822A. The intermediate plate 823A is also called a spacer block.

The lower die 820A further includes an ejector plate 825A disposed to be freely raised and lowered in the space 824A, and a rod-shaped ejector pin 826A extending upward from the ejector plate 825A. The ejector plate 825A is biased downward by a return spring (not illustrated), and is pressed against the attachment plate 821A.

The ejector pin 826A is inserted to be freely raised and lowered into a pin hole penetrating the die plate 822A in the vertical direction. In a state where the ejector plate 825A is pressed against the attachment plate 821A, an upper end surface of the ejector pin 826A forms a wall surface of the cavity space 801A, and abuts on the molding product 20. At least one ejector pin 826A is provided for each cavity space 801A. The ejector pin 826A is raised to eject the molding product 20 upward, and the molding product 20 is ejected. Thereafter, the ejector pin 826A is lowered.

The lower die 820A further includes a mold opening and closing pin 827A disposed to be freely raised and lowered in a pin hole penetrating the attachment plate 821A, the intermediate plate 823A, and the die plate 822A in the vertical direction. A stopper (not illustrated) is provided so that the mold opening and closing pin 827A does not fall downward of the attachment plate 821A. The mold opening and closing pin 827A is raised to press the upper die 810A upward from the lower die 820A, and the mold opening is performed. On the other hand, the mold opening and closing pin 827A is lowered to place the upper die 810A on the lower die 820A, and the mold closing is performed. Three or more mold opening and closing pins 827A (only two are illustrated in FIG. 4) are provided so that the upper die 810A can be stably supported.

The ejector unit 200 includes an ejector crosshead 210 that is raised and lowered below the lower platen 120, and a drive mechanism 220 that raises and lowers the ejector crosshead 210. The drive mechanism 220 includes an ejector motor 221 and a motion conversion mechanism 222 that converts a rotary motion of the ejector motor 221 into a linear motion of the ejector crosshead 210. The motion conversion mechanism 222 includes a screw shaft and a screw nut screwed to the screw shaft. A ball or a roller may be interposed between the screw shaft and the screw nut.

For example, a position or a movement speed of the ejector crosshead 210 is detected by using an ejector motor encoder. The ejector motor encoder detects the rotation of the ejector motor 221, and transmits a signal indicating a detection result thereof to the control device 700. An ejector crosshead position detector for detecting the position of the ejector crosshead 210, and an ejector crosshead movement speed detector for measuring the movement speed of the ejector crosshead 210 are not limited to the ejector motor encoder, and a general detector can be used.

The ejector unit 200 further includes an ejector rod 230 extending upward from the ejector crosshead 210. The ejector rod 230 is disposed to be freely raised and lowered in a fixing hole 123 penetrating the lower platen 120 in the vertical direction. The ejector rod 230 passes through a rotation hole 124 penetrating the rotary table 121 in the vertical direction and a through-hole 828A penetrating the attachment plate 821A in the vertical direction, and comes into contact with the ejector plate 825A to press the ejector pin 826A upward via the ejector plate 825A.

In addition, the ejector unit 200 further includes a mold opening and closing rod 240 extending upward from the ejector crosshead 210. The mold opening and closing rod 240 is disposed to be freely raised and lowered in a fixing hole 125 penetrating the lower platen 120 in the vertical direction. The mold opening and closing rod 240 passes through a rotation hole 126 penetrating the rotary table 121 in the vertical direction, and comes into contact with the mold opening and closing pin 827A to press the mold opening and closing pin 827A upward. The number of the mold opening and closing rods 240 may be the same as the number of the mold opening and closing pins 827A.

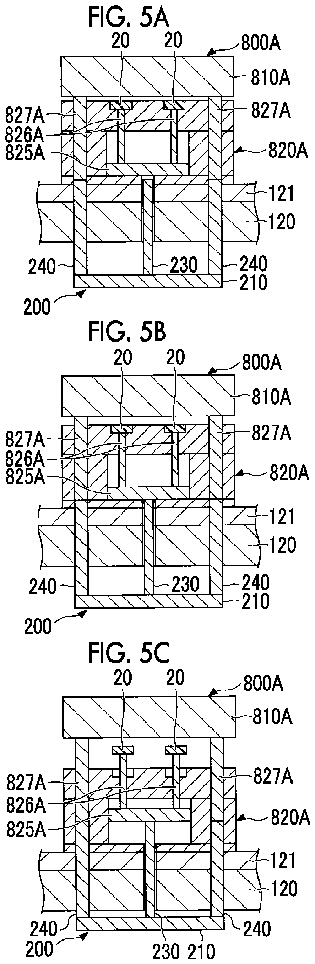

Next, an operation of the ejector unit 200 will be described with reference to FIGS. 4 and 5A to 5C. FIG. 4 illustrates an example of the ejector unit when the rotation of the rotary table is stopped. FIG. 5A is a sectional view illustrating an example of the ejector unit after the mold opening starts and before the ejection operation starts. FIG. 5B is a sectional view illustrating an example of the ejector unit when the ejection operation starts. FIG. 5C is a sectional view illustrating an example of the ejector unit when the mold opening is completed and the ejection operation is completed.

As illustrated in FIG. 4, when the rotation of the rotary table 121 is stopped, the positions of the fixing hole 123 of the lower platen 120 and the rotation hole 124 of the rotary table 121 are aligned with each other, and the positions of the fixing hole 125 of the lower platen 120 and the rotation hole 126 of the rotary table 121 are aligned with each other. In this case, the ejector rod 230 and the mold opening and closing rod 240 are stopped below the rotary table 121. In addition, the upper die 810A is placed on the lower die 820A.

Next, the control device 700 drives the ejector motor 221 to raise the ejector crosshead 210 from a raising start position to the mold opening start position. As a result, the mold opening and closing rod 240 abuts on the mold opening and closing pin 827A. Subsequently, the control device 700 drives the ejector motor 221 to further raise the ejector crosshead 210, and start the mold opening process. In the mold opening process, as illustrated in FIG. 5A, the mold opening and closing pin 827A is pressed upward by the mold opening and closing rod 240, and the upper die 810A is pressed upward from the lower die 820A.

Subsequently, the control device 700 drives the ejector motor 221 to further raise the ejector crosshead 210 to the ejection start position. As a result, as illustrated in FIG. 5B, the ejector rod 230 abuts on the ejector plate 825A. Subsequently, the control device 700 drives the ejector motor 221 to further raise the ejector crosshead 210, and start the ejection process. In the ejection process, the ejector pin 826A is pressed upward via the ejector plate 825A, and the molding product 20 is ejected upward from the lower die 820A.

Subsequently, the control device 700 drives the ejector motor 221 to raise the ejector crosshead 210 to a raising completion position, and stops the ejector crosshead 210. As a result, the mold opening process and the ejection process are completed, and as illustrated in FIG. 5C, the molding product 20 is ejected upward from the lower die 820A. Thereafter, the molding product 20 is unloaded out by an unloading machine.

Thereafter, the control device 700 drives the ejector motor 221 to lower the ejector crosshead 210 from a lowering start position to a lowering completion position, and stops the ejector crosshead 210. The ejector rod 230 and the mold opening and closing rod 240 stop below the rotary table 121, and the rotary table 121 is rotated again.

A raising speed and positions (including the raising start position, the raising speed switching position, the mold opening start position, the ejection start position, and the raising completion position) of the ejector crosshead 210 are collectively set as a series of setting conditions. The raising start position, the raising speed switching position, the mold opening start position, the ejection start position, and the raising completion position are aligned in this order from the lower side toward the upper side, and represent the start point and the end point of the section in which the raising speed is set. The raising speed is set for each section. The number of the raising speed switching positions may be one or more. The raising speed switching position may not be set.

A lowering speed and positions (including the lowering start position, the lowering speed switching position, and the lowering completion position) of the ejector crosshead 210 are collectively set as a series of setting conditions. The lowering start position, the lowering speed switching position, and the lowering completion position are aligned in this order from the upper side toward the lower side, and represent the start point and the end point of the section in which the lowering speed is set. The lowering speed is set for each section. The number of the lowering speed switching positions may be one or more. The lowering speed switching position may not be set. The lowering start position and the raising completion position may be the same position. In addition, the lowering completion position and the raising start position may be the same position.

### Injection Unit

The injection unit 300 is raised and lowered with respect to the upper platen 110 by the moving unit 400 illustrated in FIG. 1. The injection unit 300 touches the mold units 800A, 800B, and 800C, and fills the cavity space (for example, the cavity space 801A) inside the mold units 800A, 800B, and 800C with the molding material. As illustrated in FIGS. 2 and 3, for example, the injection unit 300 includes a cylinder 310 that heats the molding material, a nozzle 320 provided in a lower end portion of the cylinder 310, a screw 330 disposed to be freely raised and lowered and rotatable inside the cylinder 310, a plasticizing motor 340 that rotates the screw 330, an injection motor 350 that advances and retreats the screw 330, and a load detector 360 that measures a load transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in an upper portion of the cylinder 310. A cooler 312 such as a water-cooling cylinder is provided on an outer periphery of the upper portion of the cylinder 310. Below the cooler 312, a heating unit 313 such as a band heater and a temperature measurer 314 are provided on an outer periphery of the cylinder 310.

The cylinder 310 is divided into a plurality of zones in the axial direction (for example, the Z-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a lower end portion of the cylinder 310, and is pressed against the mold units 800A, 800B, and 800C. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely raised and lowered inside the cylinder 310. When the screw 330 is rotated, the molding material is fed downward along a helical groove of the screw 330. The molding material is gradually melted by heat from the cylinder 310 while being fed downward. As the liquid molding material is fed downward of the screw 330, is accumulated in a lower portion of the cylinder 310, and the screw 330 is raised. Thereafter, when the screw 330 is lowered, the liquid molding material accumulated below the screw 330 is injected from the nozzle 320, and fills the inside of the mold units 800A, 800B, and 800C.

As a backflow prevention valve for preventing a backflow of the molding material fed upward from the lower side of the screw 330 when the screw 330 is pressed downward, a backflow prevention ring 331 is attached to the lower portion of the screw 330 to be freely raised and lowered.

The backflow prevention ring 331 is pressed upward by the pressure of the molding material below the screw 330 when the screw 330 is lowered, and is relatively raised with respect to the screw 330 to a close position (refer to FIG. 3) for closing a flow path of the molding material. In this manner, un upward backflow of the molding material accumulated below the screw 330 is prevented.

On the other hand, the backflow prevention ring 331 is pressed downward by the pressure of the molding material fed downward along the helical groove of the screw 330 when the screw 330 is rotated, and is relatively lowered with respect to the screw 330 to an open position (refer to FIG. 2) for opening the flow path of the molding material. In this manner, the molding material is fed downward of the screw 330.

The backflow prevention ring 331 may be either a co-rotation type rotating together with the screw 330 or a non-co-rotation type that does not rotate together with the screw 330.

The injection unit 300 may include a drive source that raises and lowers the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 raises and lowers the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that raises and lowers the screw 330 is not limited to the injection motor 350, and may be a hydraulic cylinder, for example.

The load detector 360 measures a load transmitted between the injection motor 350 and the screw 330. The detected load is converted into the pressure by the control device 700. The load detector 360 is provided in a load transmission channel between the injection motor 350 and the screw 330, and measures the load acting on the load detector 360.

The load detector 360 transmits a signal of the detected load to the control device 700. The load detected by the load detector 360 is converted into the pressure acting between the screw 330 and the molding material, and is used in controlling or monitoring the pressure received from the molding material by the screw 330, a back pressure against the screw 330, or the pressure acting on the molding material from the screw 330.

The pressure detector that measures the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold units 800A, 800B, and 800C.

The injection unit 300 performs a plasticizing process, a filling process, and a holding pressure process under the control of the control device 700. The filling process and the holding pressure process may be collectively referred to as an injection process.

In the plasticizing process, the plasticizing motor 340 is driven to rotate the screw 330 at a set rotation speed, and the molding material is fed downward along the helical groove of the screw 330. As a result, the molding material is gradually melted. As the liquid molding material is fed downward of the screw 330, is accumulated in a lower portion of the cylinder 310, and the screw 330 is raised. For example, a rotation speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden raising of the screw 330. The back pressure applied to the screw 330 is measured by using the load detector 360, for example. The load detector 360 transmits a signal indicating a detection result thereof to the control device 700. When the screw 330 is raised to a plasticizing completion position and a predetermined amount of the molding material is accumulated below the screw 330, the plasticizing process is completed.

The position and the rotation speed of the screw 330 in the plasticizing process are collectively set as a series of setting conditions. For example, a plasticizing start position, a rotation speed switching position, and a plasticizing completion position are set. The positions are aligned in this order from the lower side toward the upper side, and represent the start point and the end point of the section in which the rotation speed is set. The rotation speed is set for each section. The number of the rotation speed switching positions may be one or more. The rotation speed switching position may not be set. In addition, the back pressure is set for each section.

In the filling process, the injection motor 350 is driven to lower the screw 330 at a set movement speed, and the cavity space (for example, the cavity space 801A) inside the mold units 800A, 800B, and 800C is filled with the liquid molding material accumulated below the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the upper side toward the lower side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When a measurement value of the load detector 360 is equal to or smaller than a setting pressure, the screw 330 is lowered at a set movement speed. On the other hand, when the measurement value of the load detector 360 exceeds the setting pressure, in order to protect the mold, the screw 330 is lowered at the movement speed slower than the set movement speed so that the measurement value of the load detector 360 is equal to or smaller than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be lowered at a low speed, or may be raised at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 downward. A pressure (hereinafter, also referred to as a "holding pressure") of the molding material in the lower end portion of the screw 330 is held at a setting pressure, and the molding material remaining inside the cylinder 310 is pressed toward the mold units 800A, 800B, and 800C. The molding material which is insufficient due to cooling shrinkage inside the mold units 800A, 800B, and 800C can be replenished. The holding pressure is measured by using the load detector 360, for example. The load detector 360 transmits a signal indicating a detection result thereof to the control device 700. A set value of the holding pressure may be changed depending on an elapsed time from the start of the holding pressure process. The holding pressure and a holding time for holding the holding pressure in the holding pressure process may be respectively set, or may be collectively set as a series of setting conditions.

In the holding pressure process, the molding material in the cavity space (for example, the cavity space 801A) inside the mold units 800A, 800B, and 800C is gradually cooled, and when the holding pressure process is completed, an inlet of the cavity space is closed by the solidified molding material. This state is referred to as gate seal, and prevents the backflow of the molding material from the cavity space. After the holding pressure process, a cooling process starts. In the cooling process, the molding material inside the cavity space is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be raised and lowered, or the screw is disposed to be rotatable and to be freely raised and lowered. On the other hand, a plunger is disposed to be freely raised and lowered inside the injection cylinder.

In addition, the injection unit 300 of the present embodiment is a vertical type in which the axial direction of the cylinder 310 is the vertical direction, but may be a horizontal type in which the axial direction of the cylinder 310 is the horizontal direction. The mold clamping unit combined with the injection unit 300 of the horizontal type may be the horizontal type or the vertical type. Similarly, the mold clamping unit combined with the injection unit 300 of the vertical type may be the vertical type or the horizontal type.

### Moving Unit

As illustrated in FIG. 1, the moving unit 400 raises and lowers the injection unit 300 with respect to the upper platen 110. The moving unit 400 presses the nozzle 320 against the mold units 800A, 800B, and 800C, thereby generating a nozzle touch pressure. For example, the moving unit 400 includes a plurality of hydraulic cylinders 401 and 402. The plurality of hydraulic cylinders 401 and 402 are disposed symmetrically around the nozzle 320.

In a state where the nozzle 320 is separated from the mold units 800A, 800B, and 800C by the moving unit 400, the mold clamping unit 100 rotates the mold units 800A, 800B, and 800C together with the rotary table 121. Thereafter, the moving unit 400 presses the nozzle 320 against the mold units 800A, 800B, and 800C, thereby generating the nozzle touch pressure.

In the present embodiment, the moving unit 400 includes the hydraulic cylinders 401 and 402, but the present invention is not limited thereto. For example, instead of the hydraulic cylinders 401 and 402, the moving unit 400 may include an injection unit moving motor fixed to the upper platen 110 or the injection unit 300, and a motion conversion mechanism that converts the rotary motion of the injection unit moving motor to the linear motion of the injection unit 300.

### Control Device

For example, the control device 700 is configured to include a computer, and includes a central processing unit (CPU) 701, a storage medium 702 such as a memory, an input interface 703, and an output interface 704 as illustrated in FIGS. 2 and 3. The control device 700 performs various types of control by causing the CPU 701 to execute a program stored in the storage medium 702. In addition, the control device 700 receives a signal from the outside through the input interface 703, and transmits the signal to the outside through the output interface 704.

The control device 700 causes each of the mold units 800A, 800B, and 800C to repeatedly perform a process performed at the first position P1, a table rotating process, a process performed at the second position P2, a table rotating process, and a process performed at the third position P3, and a table rotating process, thereby repeatedly manufacturing the molding product 20. A series of operations for obtaining the molding product 20, for example, an operation until the subsequent platen closing process starts after the platen closing process starts will be referred to as a "shot" or a "molding cycle". In addition, a time required for one shot will be referred to as a "molding cycle time" or a "cycle time".

For example, one molding cycle has the process performed at the first position P1, the table rotating process, the process performed at the second position P2, the table rotating process, the process performed at the third position P3, and the table rotating process in this order.

For example, at the first position P1, a platen closing process, a pressurizing process, a mold clamping process, a filling process, a holding pressure process, a depressurizing process, and a platen opening process are performed. The platen closing process, the pressurizing process, the mold clamping process, the filling process, the holding pressure process, the depressurizing process, and the platen opening process start in this order. Starting the mold clamping process may coincide with starting the filling process. The filling process and the holding pressure process are performed during the mold clamping process. Completing the depressurizing process coincides with starting the platen opening process.

For example, at the second position P2, the cooling process is performed. The cooling process is performed until the ejection process starts after the depressurizing process starts. Therefore, the cooling process is performed not only at the second position P2 but also at the first position P1 and the third position P3.

For example, at the third position P3, the mold opening process, the ejection process, and the mold closing process are performed. The mold opening process, the ejection process, and the mold closing process start in this order. Completing the mold opening process may coincide with completing the ejection process. After the ejection process is completed, the mold closing process starts.

While various processes are performed at the third position P3, the plasticizing process is performed at the first position P1 to prepare for the subsequent molding cycle.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display information such as settings of the injection molding machine 10 and a current state of the injection molding machine 10. In addition, for example, the screen of the touch panel 770 may display a button for receiving the input operation of the user or an operation unit such as an input column. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a set value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided.

### Positioning Mechanism of Rotary Table

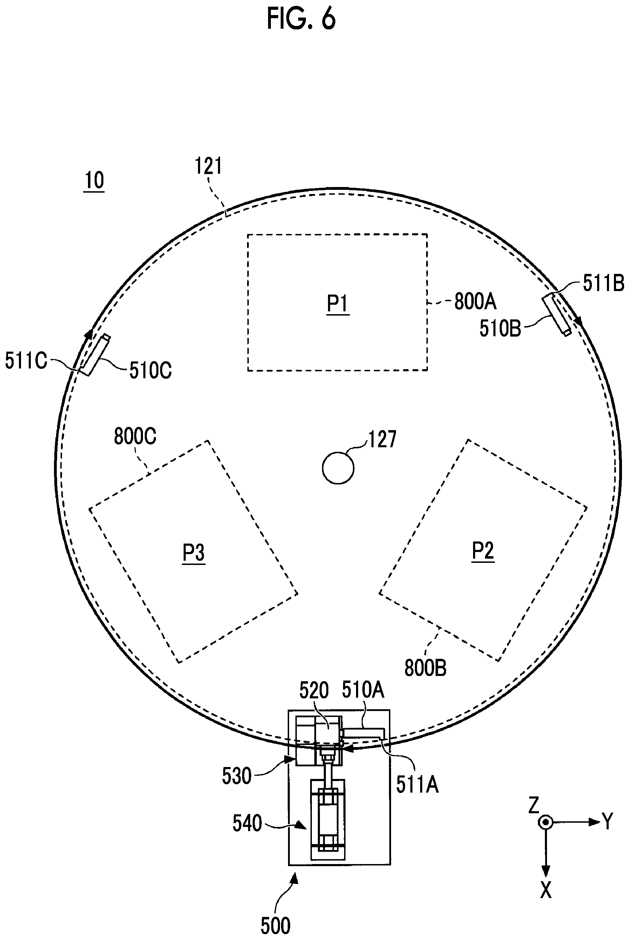

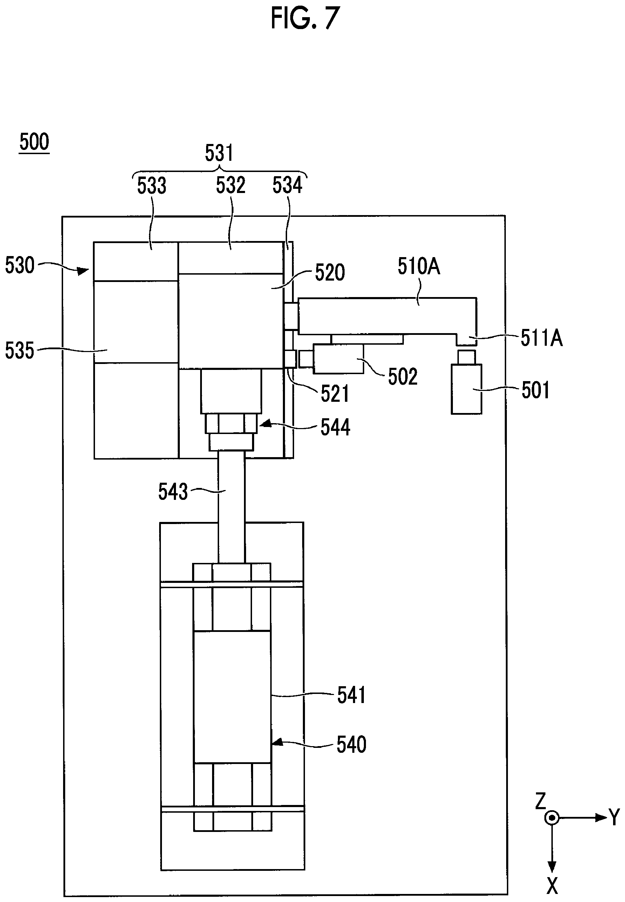

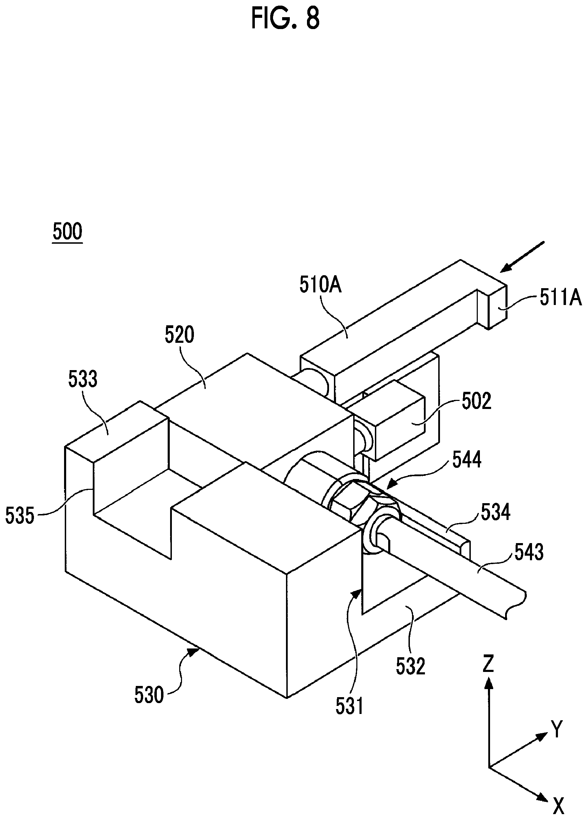

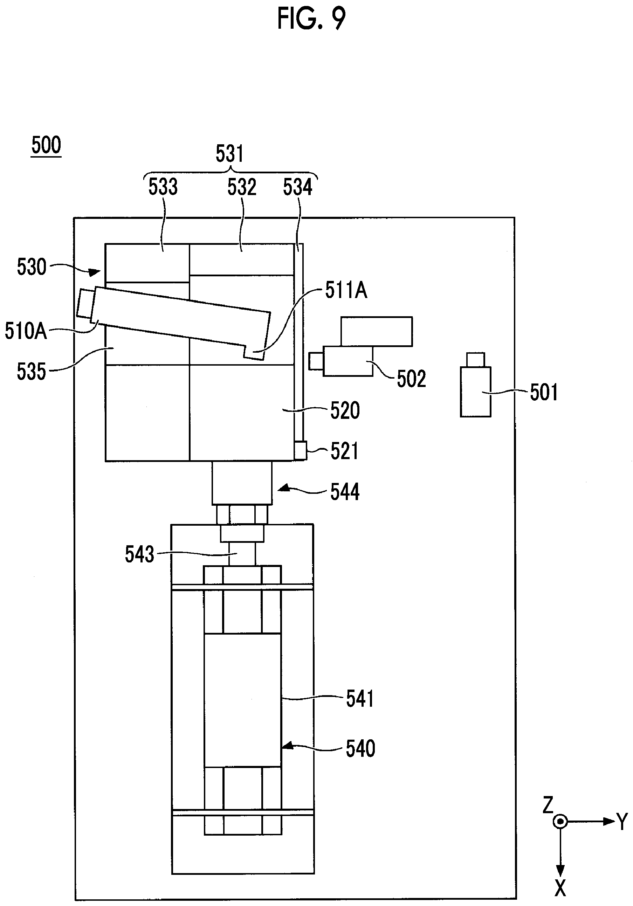

FIG. 6 is a plan view illustrating a positioning mechanism of the rotary table according to the embodiment. In FIG. 6, outlines of the mold units 800A, 800B, and 800C and the rotary table 121 are illustrated by broken lines. In addition, in FIG. 6, a rotation angle detector 501 and a position detector 502 which are illustrated in FIG. 7 are not illustrated. FIG. 7 is an enlarged plan view illustrating a portion in FIG. 6, and is a plan view illustrating a state where a block is pressed against a stopper. FIG. 8 is a perspective view when the block and the stopper in FIG. 7 are viewed from diagonally above. FIG. 9 is a plan view corresponding to FIG. 7, and is a plan view illustrating a state where the block laterally passes through the stopper.

As illustrated by the broken line in FIG. 6, the plurality of mold units 800A, 800B, and 800C are attached to the rotary table 121. The plurality of mold units 800A, 800B, and 800C are disposed rotationally symmetrically around the rotary shaft 127 of the rotary table 121. The rotary table 121 is rotated around the rotary shaft 127 so that each of the plurality of mold units 800A, 800B, and 800C is sequentially disposed at a first position P1, a second position P2, and a third position P3.

In FIG. 6, the mold unit 800A is disposed at the first position P1, the mold unit 800B is disposed at the second position P2, and the mold unit 800C is disposed at the third position P3. A rotation angle of the rotary table 121 when the mold unit 800A is disposed at the first position P1 is 0°.

In addition, when the mold unit 800A is disposed at the second position P2, the mold unit 800B is disposed at the third position P3, and the mold unit 800C is disposed at the first position P1. The rotation angle of the rotary table 121 when the mold unit 800A is disposed at the second position P2 is 120° .

In addition, when the mold unit 800A is disposed at the third position P3, the mold unit 800B is disposed at the first position P1, and the mold unit 800C is disposed at the second position P2. The rotation angle of the rotary table 121 when the mold unit 800A is disposed at the third position P3 is 240° .

The rotary table 121 is stopped at a preset rotation angle (for example, 0°, 120°, and 240°) . The number of stop positions of the rotary table 121 may be the same as the number of the mold units. Without being limited to three, the number may be two, or may be four or more.

The injection molding machine 10 includes a positioning mechanism 500 for positioning the stop position of the rotary table 121. The positioning mechanism 500 includes a plurality of blocks 510A, 510B, and 510C provided in the rotary table 121, and a stopper 520 against which the plurality of blocks 510A, 510B, and 510C are pressed to stop the rotation of the rotary table 121.

The plurality of blocks 510A, 510B, and 510C are disposed rotationally symmetrically around the rotary shaft 127 of the rotary table 121. The rotary table 121 is rotated around the rotary shaft 127 in a first direction (clockwise direction in FIG. 6) so that the plurality of blocks 510A, 510B, and 510C are sequentially pressed against the stopper 520.

As illustrated in FIG. 6, when the block 510A is pressed against the stopper 520, the rotary table 121 is stopped at a rotation angle of 0° . When another block 510B is pressed against the stopper 520, the rotary table 121 is stopped at a rotation angle of 120°. When yet another block 510C is pressed against the stopper 520, the rotary table 121 is stopped at a rotation angle of 240°.

The rotary table 121 includes a first surface (for example, an upper surface) to which the mold units 800A, 800B, and 800C are attached, and a second surface (for example, a lower surface) opposite to the first surface. For example, the blocks 510A, 510B, and 510C are provided on the second surface of the rotary table 121. More specifically, the blocks 510A, 510B, and 510C are provided in a peripheral edge portion of the second surface of the rotary table 121.

As illustrated in FIG. 7, the positioning mechanism 500 includes the rotation angle detector 501 that detects whether the rotation angle of the rotary table 121 is a set angle (for example, 0°, 120°, and 240°). For example, the rotation angle detector 501 is a proximity switch, and detects the presence of detecting bodies 511A, 511B, and 511C provided in the blocks 510A, 510B, and 510C to detect whether the rotation angle of the rotary table 121 is the set angle (for example, 0°, 120°, and 240°). The rotation angle detector 501 transmits a signal indicating a detection result thereof to the control device 700.

As illustrated in FIGS. 7 and 8, the positioning mechanism 500 includes a pressing member 530 that presses the stopper 520 from a side opposite to the blocks 510A, 510B, and 510C, when the blocks 510A, 510B, and 510C are pressed against the stopper 520. In FIGS. 7 and 8, the radial direction of the rotary table 121 is the X-axial direction. A positive direction of the X-axis is an outward direction in the radial direction, and a negative direction of the X-axis is an inward direction in the radial direction.

The pressing member 530 is fixed to the lower platen 120 or the frame 900, and presses the stopper 520 on both sides of the rotary table 121 in the radial direction across a movement locus of the blocks 510A, 510B, and 510C. Therefore, compared to a case in the related art where the stopper 520 is pressed only on one side of the movement locus of the blocks 510A, 510B, and 510C, a rotational moment can be prevented from being generated in the stopper 520, and the stopper 520 can be stably pressed. As a result, accuracy in positioning the stop position of the rotary table 121 can be improved. In addition, a load applied to a piston rod 543 of a drive unit 540 (to be described later) can be reduced, and the piston rod 543 can be prevented from being broken.

The positioning mechanism 500 includes the drive unit 540 that moves the stopper 520 in the radial direction of the rotary table 121. The drive unit 540 moves the stopper 520 to an abutment position (position illustrated in FIGS. 7 and 8) where the stopper 520 enters the movement locus of the blocks 510A, 510B, and 510C, and a retreated position (position illustrated in FIG. 9) where the stopper 520 is retreated from the movement locus of the blocks 510A, 510B, and 510C.

The positioning mechanism 500 includes the position detector 502 that detects whether a position of the stopper 520 is the abutment position. For example, the position detector 502 is a proximity switch, and detects that the position of the stopper 520 is the abutment position by detecting the presence of the detecting body 521 provided in the stopper 520. The position detector 502 transmits a signal indicating a detection result thereof to the control device 700.

For example, the drive unit 540 is a cylinder. The drive unit 540 includes a cylinder tube 541, a piston (not illustrated) disposed to be freely advanced and retreated in an internal space of the cylinder tube 541, and the piston rod 543 attached to the piston. The piston is attached to one end of the piston rod 543, and the stopper 520 is attached to the other end of the piston rod 543 via a floating joint 544.

The floating joint 544 includes a spherical body and a ball receiving seat that supports the spherical body to be rotatable. One of the spherical body and the ball receiving seat (for example, the spherical body) is fixed to the stopper 520, and the other of the spherical body and the ball receiving seat (for example, the ball receiving seat) is fixed to the piston rod 543. The floating joint 544 prevents the rotational moment generated in the stopper 520 from being transmitted to the piston rod 543.

The drive unit 540 is not limited to the cylinder. For example, the drive unit 540 may include a rotation motor and a motion conversion mechanism such as a ball screw mechanism that converts a rotary motion of the rotation motor into a linear motion of the rod. The stopper 520 is attached to a tip of the rod via the floating joint 544.

The pressing member 530 includes a guide portion 531 that guides the movement of the stopper 520. The guide portion 531 can regulate a moving direction of the stopper 520. For example, the guide portion 531 includes a base wall 532 fixed to the lower platen 120 or the frame 900, a first vertical wall 533 perpendicular to the base wall 532, and a second vertical wall 534 perpendicular to the base wall 532. The base wall 532 is horizontally provided. A guide groove is formed by the base wall 532, the first vertical wall 533, and the second vertical wall 534, and the stopper 520 moves inside the guide groove.

The first vertical wall 533 presses the stopper 520 from a side opposite to the blocks 510A, 510B, and 510C, when the blocks 510A, 510B, and 510C are pressed against the stopper 520. The first vertical wall 533 includes a cutout 535 at a position of the movement locus of the blocks 510A, 510B, and 510C. The cutout 535 is formed in a U shape, for example. The stopper 520 can pass through the blocks 510A, 510B, and 510C in a state where the stopper 520 is retreated to the retreated position.

On the other hand, the second vertical wall 534 supports the stopper 520 from a side opposite to the first vertical wall 533. As illustrated in FIG. 8, the blocks 510A, 510B, and 510C pass above the second vertical wall 534, when pressed against the stopper 520. Therefore, a height of the second vertical wall 534 is lower than a height of the first vertical wall 533.

The pressing member 530 is provided at a location excluding the movement locus of the blocks 510A, 510B, and 510C. Therefore, the stopper 520 can pass through the blocks 510A, 510B, and 510C in a state where the stopper 520 is retreated to the retreated position. For example, the pressing member 530 includes the cutout 535 in the movement locus of the blocks 510A, 510B, and 510C.

Next, an operation for changing the rotation angle of the rotary table 121 from 0° to 120° will be described. The operation for changing the rotation angle from 120° to 240° and the operation for changing the rotation angle from 240° to 0° are the same as the operation for changing the rotation angle from 120° to 240°, and thus, description thereof will be omitted.

When the control device 700 changes the rotation angle of the rotary table 121 from 0° to 120°, the control device 700 first rotates the rotary table 121 by approximately 0.5° in a second direction (counterclockwise direction in FIG. 6) which is opposite to the first direction, and separates the block 510A from the stopper 520. In this manner, the stopper 520 can be moved.

Next, the control device 700 drives the drive unit 540 to move the stopper 520 from the abutment position to the retreated position. Thereafter, the control device 700 rotates the rotary table 121 in the first direction. As a result, as illustrated in FIG. 9, the block 510A passes through the cutout 535 of the pressing member 530.

Next, the control device 700 drives the drive unit 540 to move the stopper 520 from the retreated position to the abutment position, before the rotation angle of the rotary table 121 reaches 120°. Thereafter, the block 510B abuts on the stopper 520, the rotation angle of the rotary table 121 reaches 120°, and the rotation operation of the rotary table 121 is stopped.

### Modification Example of Positioning Mechanism not being part of the invention

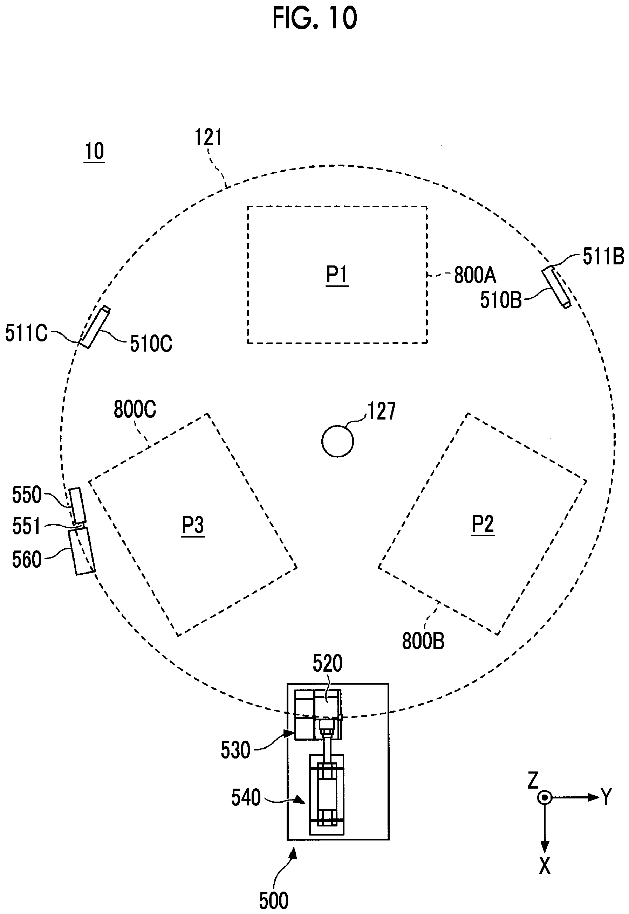

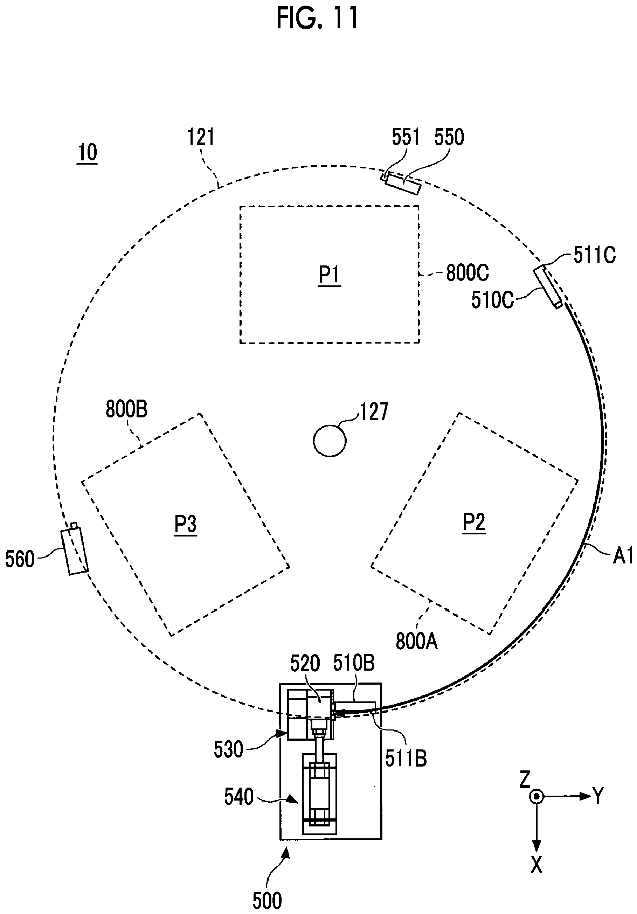

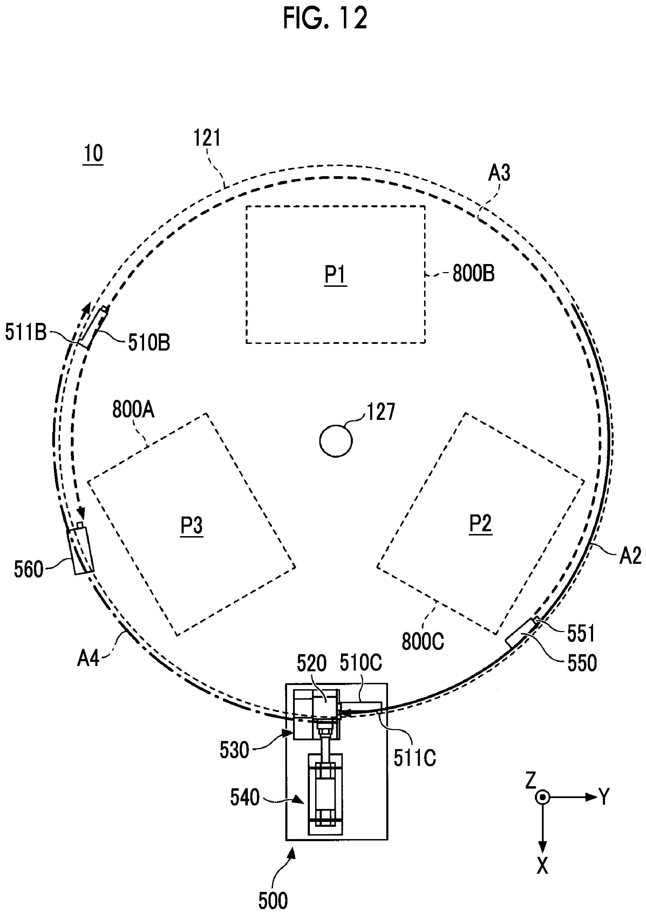

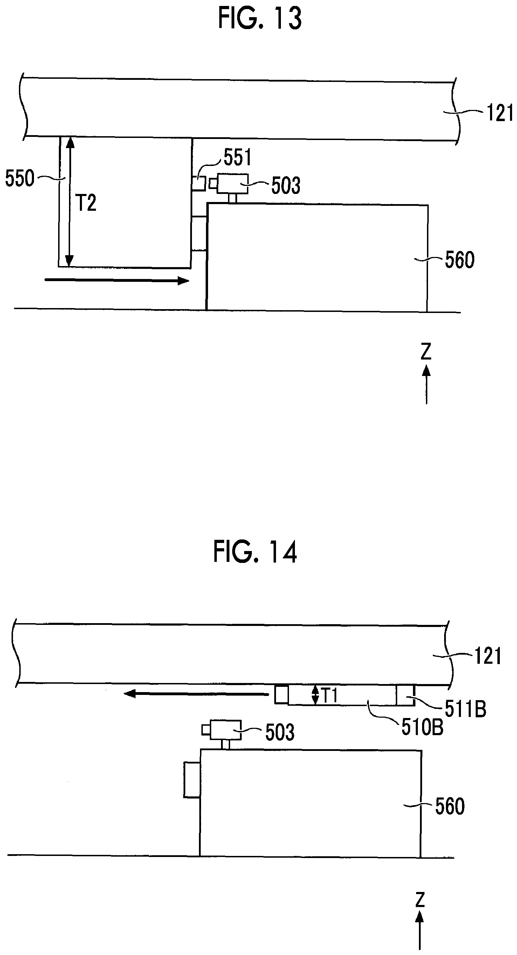

Next, the positioning mechanism 500 according to the modification example which is not part of the invention will be described with reference to FIGS. 10 to 14. FIG. 10 is a plan view illustrating a state where the rotary table is positioned at a rotation angle of 0° by the positioning mechanism according to the modification example not being part of the invention. FIG. 11 is a plan view illustrating a state where the rotary table is positioned at a rotation angle of 120° by the positioning mechanism according to the modification example not being part of the invention. FIG. 12 is a plan view illustrating a state where the rotary table is positioned at a rotation angle of 240° by the positioning mechanism according to the modification example. FIG. 13 is a side view illustrating a state where a second block according to the modification example not being part of the invention is pressed against a second stopper. FIG. 14 is a side view illustrating a state where a first block according to the modification example passes above the second stopper.

As in the positioning mechanism 500 of the above-described embodiment, the positioning mechanism 500 of the present modification example includes a plurality of first blocks 510B and 510C, a first stopper 520, the pressing member 530, and the drive unit 540. In addition, as in the positioning mechanism 500 of the above-described embodiment, the positioning mechanism 500 of the present modification example may include the rotation angle detector 501 and the position detector 502.

As illustrated by an arrow A1 in FIG. 11, when the rotary table 121 is rotated in the first direction (for example, in the clockwise direction) and the first block 510B is pressed against the first stopper 520, the rotary table 121 is stopped at a rotation angle of 120°. In addition, as illustrated by an arrow A2 in FIG. 12, when the rotary table 121 is rotated in the first direction and the first block 510C is pressed against the first stopper 520, the rotary table 121 is stopped at a rotation angle of 240°.

On the other hand, as illustrated by an arrow A3 in FIG. 12, the rotary table 121 is rotated in the second direction (for example, the counterclockwise direction) opposite to the first direction. As illustrated in FIG. 10, when the second block 550 is pressed against the second stopper 560, the rotary table 121 is stopped at a rotation angle of 0°. The rotation directions of the rotary table 121 are switched so that the disposition of a wiring or a piping fixed to the rotary table 121 is restored. Therefore, the wiring or the piping can be easily handled.

Unlike the positioning mechanism 500 of the above-described embodiment, the positioning mechanism 500 of the present modification example uses the block and the stopper in a different combination in accordance with the rotation direction of the rotary table 121. Specifically, the first blocks 510B and 510C and the first stopper 520 are used to stop the rotation of the rotary table 121 in the first direction. The second block 550 and the second stopper 560 are used to stop the rotation of the rotary table 121 in the second direction.

The rotary table 121 includes a first surface (for example, an upper surface) to which the mold units 800A, 800B, and 800C are attached, and a second surface (for example, a lower surface) opposite to the first surface. For example, the first blocks 510B and 510C and the second block 550 are provided on the second surface of the rotary table 121. More specifically, the first blocks 510B and 510C and the second block 550 are provided in a peripheral edge portion of the second surface of the rotary table 121.

As illustrated in FIGS. 10 to 12, the first blocks 510B and 510C and the second block 550 are provided at positions equidistant from the rotary shaft 127 of the rotary table 121. The movement locus of the first blocks 510B and 510C can overlap the movement locus of the second block 550. Accordingly, the positioning mechanism 500 can be miniaturized.

As described above, the movement locus of the first block 510B and 510C and the movement locus of the second block 550 overlap each other. Therefore, there is a possibility that the first blocks 510B and 510C and the second stopper 560 may interfere with each other during the rotation of the rotary table 121. In addition, there is a possibility that the second block 550 and the first stopper 520 may interfere with each other during the rotation of the rotary table 121.

For example, as illustrated in FIG. 12, when viewed in the axial direction (for example, the Z-axial direction) of the rotary shaft 127 of the rotary table 121, the second stopper 560 is provided within a movement range of the first block 510B. An arrow A4 in FIG. 12 indicates the movement range of the first block 510B, when the rotation angle of the rotary table 121 is changed from 120° to 240°. Therefore, there is a possibility that the first block 510B and the second stopper 560 may interfere with each other.

Therefore, in the present modification example, a contact position between the first blocks 510B and 510C and the first stopper 520 and a contact position between the second block 550 and the second stopper 560 are different from each other in the axial direction (for example, in the Z-axial direction) of the rotary shaft 127 of the rotary table 121. Specifically, for example, as illustrated in FIG. 14, the height of the first blocks 510B and 510C is higher than the height of the second stopper 560.

As described above, the height of the first blocks 510B and 510C is higher than the height of the second stopper 560. Therefore, while the rotation angle of the rotary table 121 is changed from 120° to 240°, the first block 510B can pass above the second stopper 560, and interference between the first block 510B and the second stopper 560 can be prevented.

As is clarified from the comparison in FIGS. 13 and 14, the first blocks 510B and 510C and the second block 550 have different axial dimensions of the rotary shaft 127 of the rotary table 121 (for example, a dimension in the Z-axial direction) . For example, a dimension T1 of the first blocks 510B and 510C in the Z-axial direction is shorter than a dimension T2 of the second block 550 in the Z-axial direction. Therefore, the first block 510B can pass above the second stopper 560.

Unlike the first stopper 520, the second stopper 560 may not move in the radial direction of the rotary table 121. Therefore, the second stopper 560 may be fixed to the lower platen 120 or the frame 900 not to be movable. The reason is that the first block 510B passes above the second stopper 560.

In addition, as illustrated in FIG. 12, the first stopper 520 is provided outside the movement range of the second block 550, when viewed in the axial direction (for example, the Z-axial direction) of the rotary shaft 127 of the rotary table 121. The arrow A3 in FIG. 12 indicates the movement range of the second block 550.

As described above, the first stopper 520 is provided outside the movement range of the second block 550. Therefore, there is no possibility that the first block 510B and the second stopper 560 may interfere with each other. Accordingly, there is no possibility that the rotation of the rotary table 121 may be hindered.

In the present modification example, the contact position between the first blocks 510B and 510C and the first stopper 520 and the contact position between the second block 550 and the second stopper 560 are different from each other in the axial direction (for example, the Z-axial direction) of the rotary shaft 127 of the rotarytable 121. However, both may be different from each other in the radial direction of the rotary table 121, or may be different from each other in both directions. In any case, interference between the block and the stopper in an unintended combination can be prevented.

As illustrated in FIG. 13, the positioning mechanism 500 includes a rotation angle detector 503 that detects whether the rotation angle of the rotary table 121 is a set angle (for example, 0°). The rotation angle detector 503 is provided around the second stopper 560.

For example, the rotation angle detector 503 is a proximity switch, and detects that the rotation angle of the rotary table 121 is the set angle (for example, 0°) by detecting the presence of the detecting body 551 provided in the second block 550. The rotation angle detector 501 transmits a signal indicating a detection result thereof to the control device 700.

As described above, the rotation angle detector 501 provided around the first stopper 520 detects that the rotation angle of the rotary table 121 is 120° or 240°. For example, the rotation angle detector 501 is a proximity switch, and detects that the rotation angle of the rotary table 121 is 120° or 240 ° by detecting the presence of the detecting bodies 511B and 511C provided in the blocks 510B and 510C. The rotation angle detector 501 transmits a signal indicating a detection result thereof to the control device 700.

Various modifications, corrections, substitutions, additions, deletions, and combinations can be made within the scope of the appended claims.

For example, the mold clamping unit 100 of the above-described embodiment and the above-described modification example is a vertical type, and the axial direction of the rotary shaft 127 of the rotary table 121 is the vertical direction. However, the present invention is not limited thereto. The mold clamping unit 100 may be a horizontal type, and the axial direction of the rotary shaft 127 of the rotary table 121 may be the horizontal direction.

### Brief Description of the Reference Symbols

10: injection molding machine
121: rotary table
510A: block
510B, 510C: block (first block)
520: stopper (first stopper)
530: pressing member
550: second block
560: second stopper
800A, 800B, 800C: mold unit

## Claims

1. An injection molding machine (10) comprising:
a rotary table (121) to which a die is attached;
a block (510A, 510B, 510C) provided in the rotary table (121) ;
a stopper (520) against which the block (510A, 510B, 510C) is pressed to stop rotation of the rotary table (121); and
a pressing member (530) that presses the stopper (520) from a side opposite to the block (510A, 510B, 510C), when the block (510A, 510B, 510C) is pressed against the stopper (520),
wherein the pressing member (530) presses, in a radial direction of the rotary table (121), the stopper (520) on both sides across a movement locus of the block (510A, 510B, 510C).

2. The injection molding machine (10) according to claim 1, further comprising:
a drive unit (540) that moves the stopper (520) in the radial direction of the rotary table (121),
wherein the pressing member (530) includes a guide portion (531) that guides a movement of the stopper (520).

3. The injection molding machine (10) according to claim 1 or 2,
wherein the pressing member (530) is provided at a location excluding the movement locus of the block (510A, 510B, 510C).

4. The injection molding machine (10) according to any one of claims 1 to 3,
wherein the pressing member (530) includes a cutout (535) in the movement locus of the block (510A, 510B, 510C).

5. The injection molding machine (10) according to any one of claims 1 to 4,
wherein the rotary table (121) includes a first surface to which the die is attached, and a second surface opposite to the first surface, and
the block (510A, 510B, 510C) is provided in the second surface of the rotary table (121).

## Patentansprüche

1. Spritzgießmaschine (10), umfassend:
einen Drehtisch (121), an dem ein Werkzeug angebracht ist;
einen Block (510A, 510B, 510C), der an dem Drehtisch (121) vorgesehen ist;
einen Stopper (520), gegen den der Block (510A, 510B, 510C) gedrückt wird, um die Drehung des Drehtisches (121) zu stoppen; und
ein Druckelement (530), das den Stopper (520) von einer dem Block (510A, 510B, 510C) gegenüberliegenden Seite drückt, wenn der Block (510A, 510B, 510C) gegen den Stopper (520) gedrückt wird,
wobei das Druckelement (530) den Stopper (520) in einer Radialrichtung des Drehtisches (121) auf beiden Seiten über einen Bewegungsort des Blocks (510A, 510B, 510C) drückt.

2. Spritzgießmaschine (10) nach Anspruch 1, ferner umfassend:
eine Antriebseinheit (540), die den Stopper (520) in der Radialrichtung des Drehtisches (121) bewegt,
wobei das Druckelement (530) einen Führungsabschnitt (531) aufweist, der eine Bewegung des Stoppers (520) führt.

3. Spritzgießmaschine (10) nach Anspruch 1 oder 2,
wobei das Druckelement (530) an einer Stelle vorgesehen ist, die den Bewegungsort des Blocks (510A, 510B, 510C) ausschließt.

4. Spritzgießmaschine (10) nach einem der Ansprüche 1 bis 3,
wobei das Druckelement (530) einen Ausschnitt (535) in der Bewegungsebene des Blocks (510A, 510B, 510C) aufweist.

5. Spritzgießmaschine (10) nach einem der Ansprüche 1 bis 4,
wobei der Drehtisch (121) eine erste Fläche, an der das Werkzeug angebracht ist, und eine der ersten Fläche gegenüberliegende zweite Fläche aufweist, und
der Block (510A, 510B, 510C) an der zweiten Oberfläche des Drehtisches (121) vorgesehen ist.

## Revendications

1. Une machine de moulage par injection (10) comprenant :
un plateau tournant (121) sur lequel une matrice est fixée ;
un bloc (510A, 510B, 510C) prévu sur le plateau tournant (121) ;
une butée (520) contre laquelle le bloc (510A, 510B, 510C) est appuyé afin d'arrêter la rotation du plateau tournant (121) ; et
un élément de pression (530) qui appuie sur la butée (520) depuis un côté opposé au bloc (510A, 510B, 510C), lorsque le bloc (510A, 510B, 510C) est appuyé contre la butée (520),
dans laquelle l'élément de pression (530) appuie, dans une direction radiale du plateau tournant (121), sur la butée (520) des deux côtés au niveau d'un point de déplacement du bloc (510A, 510B, 510C).

2. La machine de moulage par injection (10) selon la revendication 1, comprenant en outre :
une unité d'entraînement (540) qui déplace la butée (520) dans la direction radiale du plateau tournant (121),
dans laquelle l'élément de pression (530) comprend une partie de guidage (531) qui guide un déplacement de la butée (520).

3. La machine de moulage par injection (10) selon la revendication 1 ou 2,
dans laquelle l'élément de pression (530) est prévu à un emplacement qui exclut le point de déplacement du bloc (510A, 510B, 510C).

4. La machine de moulage par injection (10) selon l'une quelconque des revendications 1 à 3,
dans laquelle l'élément de pression (530) comprend une découpe (535) au niveau du point de déplacement du bloc (510A, 510B, 510C).

5. La machine de moulage par injection (10) selon l'une quelconque des revendications 1 à 4,
dans laquelle le plateau tournant (121) comprend une première surface sur laquelle la matrice est fixée, et une deuxième surface opposée à la première surface, et
le bloc (510A, 510B, 510C) est prévu sur la deuxième surface du plateau tournant (121).
